Europäisches Patentamt

**European Patent Office**

**Office européen des brevets**

(19)

(11) Veröffentlichungsnummer: **0 035 054**
A1

(12) **EUROPÄISCHE PATENTANMELDUNG**

(21) Anmeldenummer: **80106963.4**

(22) Anmeldetag: **12.11.80**

(51) Int. Cl.³: **G 02 B 7/26**

(30) Priorität: **28.02.80 DE 3007483**

(43) Veröffentlichungstag der Anmeldung: **09.09.81**
**Patentblatt 81/36**

(84) Benannte Vertragsstaaten: **BE DE FR GB NL SE**

(71) Anmelder: **Licentia Patent-Verwaltungs-GmbH,**
**Theodor-Stern-Kai 1, D-6000 Frankfurt/Main 70 (DE)**

(72) Erfinder: **Zielinski, Hans-Gerd, Dipl.-Ing.,**
**Hauptstrasse 76, D-7151 Burgstetten (DE)**

(74) Vertreter: **Schickle, Gerhard, Dipl.-Ing., Licentia**
**Patent-Verwaltungs-GmbH Theodor-Stern-Kai 1,**
**D-6000 Frankfurt/Main 70 (DE)**

(54) **Drehkupplung für Lichtwellenleiter.**

(57) Die Erfindung betrifft eine Drehkupplung für Lichtwellenleiter, bestehend aus zwei Lichtwellenleiter (5, 7)
aufnehmenden, koaxial zueinander ausgerichteten Kupplungsteilen (1, 2), die über ein Drehlager (3, 4) so miteinander verbunden sind, dass sie axial gegeneinander verdreht werden können. Dabei erfolgt eine optische Kopplung
zwischen den beiden Lichtwellenleitern (5, 7) über zwei
den Lichtstrahl aufweitende Fokussierelemente (6, 8), von
denen in jedem Kupplungsteil eines angeordnet ist.

EP 0 035 054 A1

- 2 -

Licentia Patent-Verwaltungs-GmbH          NE2-BK/Th/jo
Theodor-Stern-Kai 1                        BK 80/1
D-6000 Frankfurt 70

Drehkupplung für Lichtwellenleiter

Die Erfindung betrifft eine Drehkupplung für Lichtwellenleiter, bestehend aus zwei die Lichtwellenleiter aufnehmenden koaxial zueinander ausgerichteten Kupplungsteilen,
die über ein Drehlager so miteinander verbunden sind, daß
sie axial gegeneinander verdreht werden können.

Es ist häufig erforderlich, Signale zwischen Anlage- oder
Apparateteilen zu übertragen, die gegenseitige Rotationsbewegungen durchführen, was beispielsweise bei programmgesteuerten Werkzeugmaschinen oder Radaranlagen etc. vorkommt. Bei der Übertragung von elektrischen Signalen werden Drehkupplungen verwendet, die mit Schleifkontakten
ausgerüstet sind. Als nachteilig hierbei erweist sich,
daß sich die Schleifkontakte abnutzen, wodurch das Übertragungsverhalten solcher Drehkupplungen verschlechtert
wird. Demgegenüber besitzen Drehkupplungen für Lichtwellenleiter den Vorteil, daß keine mechanische Berührung
zwischen den signalführenden Teilen stattfinden muß.
Allerdings sind Maßnahmen zu ergreifen, die eine hinreichend gute Einkopplung des Lichts von einem Lichtwellenleiter in den gegenüberliegenden gewährleisten, auch wenn beim Verdrehen der Drehkupplung eine geringfügige Exzentrizität zwischen den optisch gekoppelten Lichtwellenleitern auftritt. Zur Lösung dieses Problems werden gemäß der DE-OS 28 00 249 die miteinander zu koppelnden sehr dünnen Lichtwellenleiter stirnflächig mit Faserstücken kontaktiert, deren Querschnitt größer ist als der der Lichtwellenleiter. Die Endflächen dieser Faserstücke sind so in den beiden gegeneinander verdrehbaren Kupplungsteilen gelagert, daß sie einander gegenüberstehen, ohne sich zu berühren. Dadurch, daß die Übertragung des Lichtes über die Schnittstelle der Drehkupplung mittels Faserstücken mit relativ großem Querschnitt erfolgt, wird zwar die Durchlaßdämpfung bei geringer Exzentrizität der Kupplungsteile wesentlich weniger erhöht als bei direkter Kopplung der Lichtwellenleiter mit sehr kleinen Stirnflächen. Es ist abertrotzdem noch eine sehr präzise Zentrizität erforderlich, um die Durchlaßdämpfung möglichst gering zu halten. Außerdem wirken sich die Stoßstellen zwischen den Lichtwellenleitern geringen Querschnits und den Faserstükken größeren Querschnitts nachteilig auf die Durchlaßdämpfung aus.

Der Erfindung liegt nun die Aufgabe zugrunde, eine Drehkupplung für Lichtwellenleiter zu schaffen, die eine nur geringe Präzision bezüglich der Zentrizität der gegeneinander verdrehbaren Kupplungsteile erfordert und dabei trotzdem hohe Anforderungen an die Durchlaßdämpfung erfüllt.

Die Aufgabe wird erfindungsgemäß dadurch gelöst, daß in an sich bekannter Weise die optische Kopplung der Lichtwellenleiter über zwei den Lichtstrahl aufweitende Fokussierelemente erfolgt, wobei in jedem der beiden Kupplungsteile ein Fokussierelement angeordnet ist. Als Fokussierelemente können dabei z.B. Linsen verwendet werden.

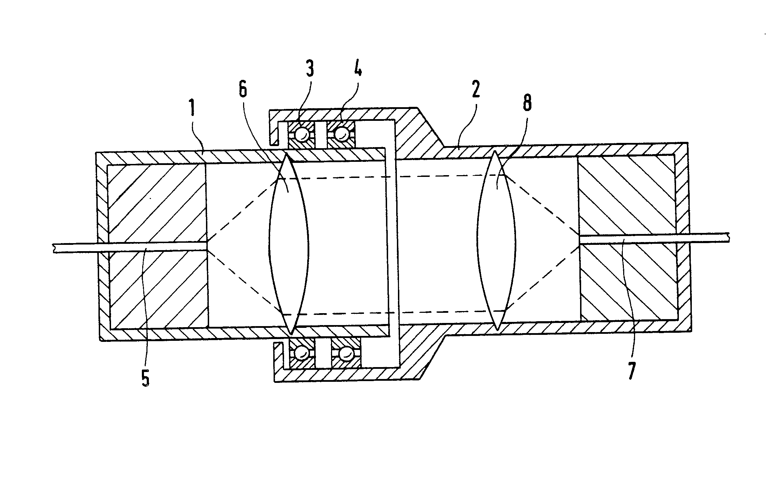

Anhand des in der Zeichnung dargestellten Ausführungsbeispiels wird im folgenden die Erfindung näher erläutert.

Die Figur zeigt eine Drehkupplung, deren beide Kupplungsteile 1 und 2 koaxial zueinander ausgerichtet und über zwei Wälzlager 3 und 4 axial drehbar miteinander verbunden sind. Die Wäzlager sind zwischen der Außenseite des einen Kupplungsteils 1 und der Innenseite des diesen überragenden anderen Kupplungsteils 2 angebracht.

Abweichend von der in diesem Ausführungsbeispiel verwendeten Drehlagerung können die beiden Kupplungsteile auf jede andere Weise axial drehbar miteinander - lösbar oder nicht lösbar - verbunden werden. Im Kupplungsteil 1 ist ein Lichtwellenleiter 5 zentrisch gelagert. Seine Stirnfläche befindet sich im Brennpunkt einer Linse 6. Im gegenüberliegenden Kupplungsteil 2 ist der zum Lichtwellenleiter 5 korrespondierende Lichtwellenleiter 7 ebenfalls zentrisch und mit seiner Stirnfläche im Brennpunkt einer Linse 8 gelagert. Die beiden Linsen 6 und 8 weiten den aus dem Lichtwellenleiter 5 bzw. 7 kommenden Lichtstrahl im zwischen ihnen liegenden Übergangsbereich von einem Kupplungsteil zum anderen auf. Durch die Strahlaufweitung ist diese Anordnung ziemlich unempfindlich gegen transversalen oder longitudinalen Versatz der beiden Kupplungsteile 1 und 2. Eine solche Drehkupplung braucht daher auch nicht mit

0035054
BK 80/1

äußerster Präzision hergestellt zu werden, was sich günstig auf die Herstellungskosten auswirkt. Zudem ist von Vorteil, daß in die Drehkupplung eindringende und auf die Linsen sich niederschlagende Schmutzpartikel aufgrund der großen Strahlapertur kaum die Lichtübertragung stören.

0035054

- 1 -

Licentia Patent-Verwaltungs-GmbH        NE2-BK/Th/jo
Theodor-Stern-Kai 1                      BK 80/1
D-6000 Frankfurt 70

Patentansprüche

1. Drehkupplung für Lichtwellenleiter, bestehend aus zwei die Lichtwellenleiter aufnehmenden koaxial zueinander ausgerichteten Kupplungsteilen, die über ein Drehlager so miteinander verbunden sind, daß sie axial gegeneinander verdreht werden können, dadurch gekennzeichnet, daß in an sich bekannter Weise die optische Kupplung der Lichtwellenleiter (5, 7) über zwei den Lichtstrahl aufweitende Fokussierelemente (6, 8) erfolgt, wobei in jedem der beiden Kupplungsteile (1,2) ein Fokussierelement angeordnet ist.

2. Drehkupplung für Lichtwellenleiter nach Anspruch 1, dadurch gekennzeichnet, daß als Fokussierelemente Linsen (6, 8) verwendet werden.

# EUROPÄISCHER RECHERCHENBERICHT

Nummer der Anmeldung

EP 80 10 6963

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 4 178 515 (A. TARASEVICH)   * Spalten 2-4 und Abbildung 1 * | 1,2 | G 02 B 7/26 |
| | US - A - 4 109 998 (M.L. IVERSON)   * Spalte 4 und Abbildungen 5,6 * | 1,2 | |

**RECHERCHIERTE SACHGEBIETE (Int. Cl.³)**

G 02 B 7/26

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Den Haag | 16-02-1981 | MALIC |

EPA form 1503.1   06.78